# EUROPÄISCHE PATENTSCHRIFT

(11) **EP 2 039 571 B1**
(45) Veröffentlichungstag und Bekanntmachung des Hinweises auf die Patenterteilung: **29.02.2012**
(21) Anmeldenummer: 09100025.7
(22) Anmeldetag: 23.10.2003
(51) Int. Cl.: B60S 1/38

(54) **Wischblatt**
Wiper blade
Essuie-glace

(30) Priorität: 15.11.2002 DE 10253580; 15.11.2002 DE 20220355 U
(43) Veröffentlichungstag der Anmeldung: 25.03.2009
(62) Teilanmeldung aus: 03773565.1
(73) Patentinhaber: ROBERT BOSCH GMBH, 70442 Stuttgart (DE)
(72) Erfinder: Bauer, Peter-Josef, 77815, Buehl (DE); De Block, Peter, 3545, Halen (BE); Dietrich, Jan, 77815, Buehl (DE)

(56) Entgegenhaltungen:
- EP-A- 0 713 810
- DE-A- 10 025 710
- DE-A- 10 058 208
- DE-A- 19 835 065

## Beschreibung

### Stand der Technik

Die Erfindung geht insbesondere aus von einem Wischblatt nach dem Oberbegriff des Anspruchs 1.

Aus der DE 198 35 065 A1 ist ein gattungsbildendes Wischblatt für ein Kraftfahrzeug bekannt. Das Wischblatt umfasst eine Wischleiste und einen in einem Längskanal, der als Hohlprofil ausgebildeten Wischleiste angeordneten, bogenförmigen, federelastischen Wischleistenträger, wobei sich entlang einer konkaven Seite des Wischleistenträgers eine Wischlippe der Wischleiste erstreckt.

Ferner umfasst das Wischblatt eine von der Wischleiste getrennt ausgebildete Adaptereinheit zur Anlenkung an einen Wischarm. Die Adaptereinheit weist auf der der Wischlippe abgewandten, infolge des Wischleistenträgers konvex ausgebildeten Seite der Wischicleiste ein im Wesentlichen von einem U-Profil gebildetes Adapterelement aus Blech auf. Das Adapterelement ist mit einstückig angeformten, krallenartigen Klemmmitteln auf den Wisehleiste und dem Wiscbleistenträger befestigt, die eine Kopfleiste der Wischleiste und den darin angeordneten Wischleistenträger untergreifen. Mittels einer Spannkraft der Klemmmittel wird das Adapterelement auf der Wischleiste und der Wischleistenträger in der Wischleiste in Längsrichtung des Wischblatt kraftschlüssig fixiert.

### Vorteile der Erfindung

Die Ereindung geht aus von einem Wischblatt, insbesondere für ein Kraftfahrzeug, mit einem federelastischen Wischleistenträger und einer vom Wischleistenträger getragenen Wischleiste, deren Wischlippe sich entlang einer konkaven Seite des Wischleistenträgers erstreckt, sowie mit einer von der Wischleiste getrennt ausgebildeten Adaptereinheit zur Anlenkung an einen Wischarm.

Der Wischleistenträger und die Wischleiste sind im Bereich der Adaptereinheit über wenigstens eine in Längsrichtung wirkende Formschlussverbindung und/oder Stoffschlussverbindung verbunden. Bei einer vorteilhaft flexiblen Gestaltungsmöglichkeit der Adaptereinheit infolge der getrennten Ausbildung von der Wischleiste können bei einer insgesamt sicheren Verbindung zwischen der Wischleiste und dem Wischleistenträger ungewünschte, die Betriebsfunktion negativ beeinflussende Quetschungen der Wischleiste vermieden werden Zudem kann ausgehend vom Wischarm zur Wischleiste ein vorteilhafter Kraftfluss erreicht und ausgehend von einem mittleren Bereich kann eine vorteilhafte freie Beweglichkeit wischen der Wischleiste und dem Wischleistenträger erzielt werden. Ferner können zusätzliche Bauteile, wie insbesondere die Wischleiste und den Wischleistenträger zueinander fixierende Endkappen, Montageaufwand und Kosten eingespart werden. Die Wischleiste und der Wischleistenträger können dabei allein durch die Sloffschlussverbindung und/oder Formschlussverbindung in Längsrichtung zueinander fixiert oder es kann zudem 3 eine kraftschlüssige Verbindung vongesehen sein.

Die erfindungsgemäße Lösung kann bei sämtlichen, dem Fachmann als geeignet etscheinenden, gattungsbildenden Wischblättern eingesetzt werden, wie beispielsweise bei einem Wischblatt mit einem Wischleistenträger, der zwei durch Bügel verbundene, in Querrichtung beabstandete Federleisten aufweist, zwischen denen eine Wischleiste mit ihrer Kopfleiste eingeschoben ist. Besonders vorteilhaft ist die erfindungsgemäße Lösung jedoch bei einem Wischblatt anwendbar, bei dem die Wischleiste als Hohlprofil mit einem Längskanal ausgebildet und der Wischleistenträger im Längskanal der Wischleiste angeordnet ist. Ohne direkte Kontaktierung zwischen der Adaptereinheit und dem Wischleistenträger und ohne die Wischleiste gefährdende hohe Spannkrafte kann eine vorteilhaft sichere Verbindung zwischen dem Wischleistenträger und der Wischleiste sowie einem Adapterelement der Adaptereinheit erreicht werden.

Ist die Stoffschlussverbindung zwischen dem Wischleistenträger und der Wischleiste von einer Klebeverbindung gebildet, kann bei einer einfachen Montage eine gewünschte Stoffschlussverbindung mit geringem konstruktivem Aufwand erreicht werden, und zwar insbesondere indem bereits bekannte Bauteile verwendet werden kommen. Neben Klebeverbindingen sind jedoch auch andere, dem Fachmann als sinnvoll erscheinende Stoffschlussverbindungen denkbar, wie beispielsweise eine durch Ultraschallschweißen erzeugte Schweißverbindung oder eine durch Umspritzen hervorgerufene Stoffschlussverbindung usw. Bei einer Wischleiste und einem in einem Lärgskanal der als Hohlprofil ausgebildeten Wilchleiste angeordneten Wischleistenträger ist insbesondere auch denkbar, dass die Wischleiste und der Wischleistenträger außerhalb dem Bereich einer Adaptereinheit über eine Stoffschlussverbindung verbunden sind, wie beispielsweise an deren Enden usw.

Ist der Wischleistenträger innerhalb eines Längskanals der Wischleiste angeordnet, können spezielle Zuführbereiche für einen Klebstoff, wie beispielsweise flächenförmige oder kanalförmige Ausnehmungen, vorgesehen sein, vorteilhaft ist jedoch ein Klebstoff der Stoffschlussverbindung über wenigstens eine Injektion in die Wischleiste eingebracht, wodurch Umgestaltungen der Wischleiste im Hinblick auf die Zuführung von Klebstoff vermieden werden können.

In einer weiteren Ausgestaltung der Erfindung wird vorgeschlagen, dass wenigstens ein Adapterelement der Adaptereinheit über eine in Längsrichtung wirkende Formschlussverbindung mit der Wischleiste verbunden ist. Es kann eine einfache und schnelle Montage des Adapterelements und ungewünscht hohe Spannkräfte zur Herstellung einer sicheren Verbindung des Adapterelements mit der Wischleiste können vermieden werden. Das Adapterelement kann dabei aus Kunststoff und/oder aus Metall hergestellt sein. Alternativ oder unterstützend zur einer Fomschlussverbindung wäre ferner denkbar, das Adapterelement über eine Klebeverbindung auf der Wischleiste zu fixieren, was sich insbesondere bei einem Adapterelement aus Kunststoff anbieten würde.

Es sind verschiedene, dem Fachmann als sinnvoll erscheinende Formschlussverbindusgen denkbar. Eine besonders einfache Formschlussverbindung mit geringem Umgestaltungsaufwand bereits bekannter Bauteile kann jedoch erreicht werden, wenn das Adapterelement wenigstens einen Stift aufweist, der im montierten Zustand in dessen Längserstreckung in die Wischleiste eingeführt ist und die Formschlussverbindung bildet. Der Stift kann dabei in eine bereits vor der Montage vorhandene Ausnehmung der Wischleiste eingeführt sein. Ist der Stift nagelförmig mit einer Spitze ausgeführt, kann dieser jedoch vorteilhaft direkt in die Wischleiste eingestreckt werden, ohne dass an dieser vorab eine entsprechende Ausnehmung vorgesehen werden muss.

Erfindungsgemäß ist zumindest ein Adapterelement der Adaptereinheit im montierten Zustand in Längsrichtung über zumindest eine Formschlussverbindung mit dem Wischleistenträger verbunden. Die Verbindung zwischen der Wischleiste und dem Wischleistenträger kann vorteilhaft durch eine direkte Verbindung zwischen dem Adapterelement und dem Wischleistenträger entlastet werden. Ferner kann vorteilhaft durch die Formschlussverbindung zwischen dem Adapterelement und dem Wischleistenträger einfach eine vorteilhafte Formschlussverbindung zwischen dem Wischleistenträger und der Wischleiste erreicht werden, beispielsweise über einen im montierten Zustand durch die Wischleiste und durch den Wischleislenträger hindurchtretenden Stift des Adapterelements.

### Zeichnung

Weitere Vorteile ergeben sich aus der folgenden Zeichnungsbeschreibung. In der Zeichnung sind Ausführungsbeispiele der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen :
- Fig. 1: ein Wischblatt in einer Seitenansicht,
- Fig. 2: das Wischblatt aus Fig. 1 in einer Draufsicht,
- Fig. 3: einen Querschnitt entlang der Linie III-III in Fig. 1 in vergrößerter Darstellung,
- Fig. 4: einen Querschnitt entlang der Linie IV-IV in Fig. 1 in vergrößerter Darstellung,
- Fig. 5: einen Ausschnitt des Wischblatts aus Fig. 1 schräg von oben und
- Fig. 6: einen der Fig. 3 entsprechenden Querschnitt durch ein alternatives Wischblatt, das durch Anspruch 1 abgedeckt wird.

### Beschreibung der Ausfuhrungsbeispiele

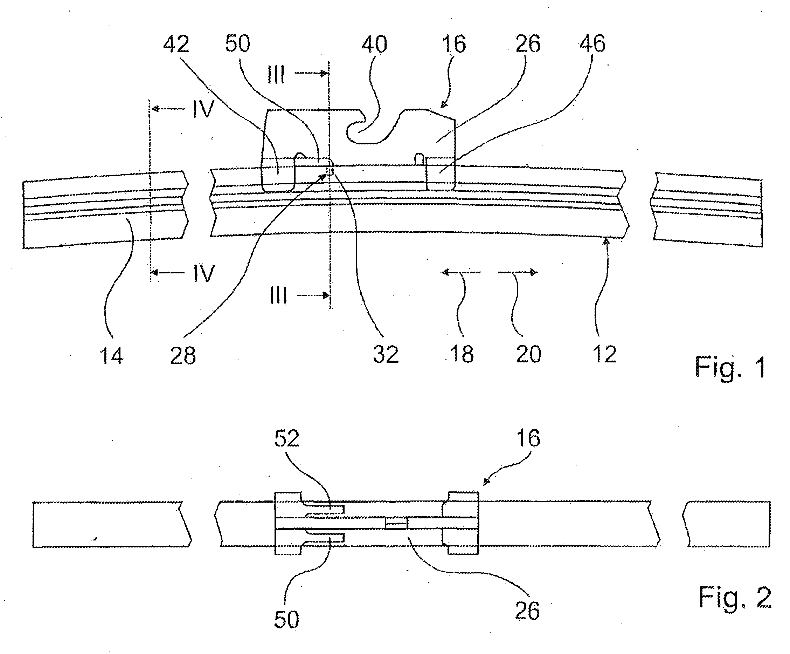

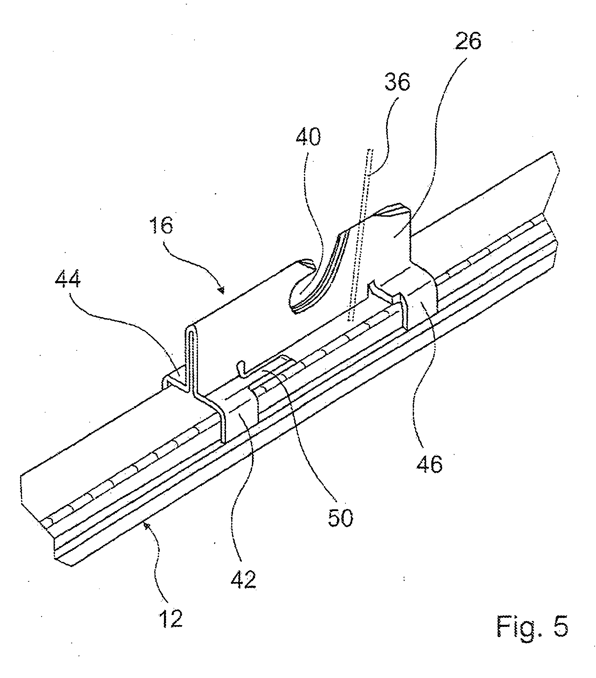

Fig. 1 zeigt ein Wischblatt für ein Kraftfahrzeug in einer Seitenansicht. Das Wischblatt umfasst eine als Hohlprofil ausgebildete Wischleiste 12 mit einem Längskanal 24, in dem ein bogenförmiger, federelastischer Wischleistenträger 10 in Längsrichtung 18 oder 20 eingeschoben ist (Fig. 1 bis 5). Die Wischleiste 12 weist eine Wischlippe 14 auf, die sich entlang einer konkaven Seite des Wischleistenträgers 10 erstreckt. Ferner umfasst das Wischblatt eine von der Wischleiste 12 getrennt ausgebildete Adaptereinheit 16 mit einem in einem Stanz-Biegeprozess hergestellten Adapterelement 26 aus Blech zur Anlenkung an einen nicht näher dargestellten Wischarm.

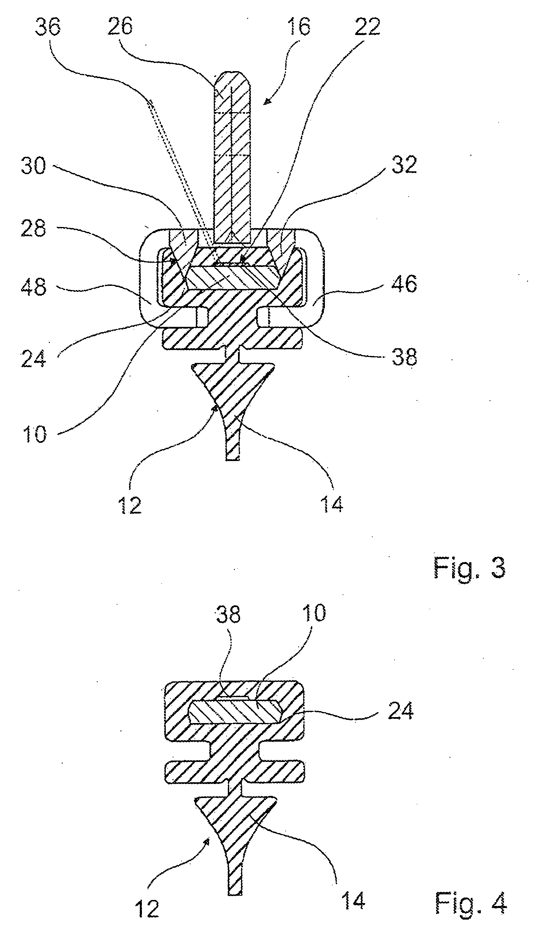

Erfindungsgemäß sind der Wischleistenträger 10 und die Wischleiste 12 im Bereich der Adaptereinheit 16 über eine von einer Kleverbindung gebildete, in Längsrichtung 18, 20 wirkende Stoffschlussverbind 22 verbunden. Ein Klebstoff zur Herstellung der Stoff schlussverbindung 22 ist über eine Injektion, und zwar über eine Injektionsnadel 36, die dies in Fig. 2 und 4 angedeutet ist, in die Wischleiste 12 eingespritzt. Der Klebstoff ist im Bereich der Adaptereinheit 16 zwischen dem Wischleistenträger 10 und der Wischleiste 12 über den Umfang des Wischleistenträgers 10 verteilt und füllt insbesondere im Bereich der Adaptereinheit 16 eine sich in Längsrichtung 18, 20 erstreckende, nutförmige Ausnehmung 38 in einer der Wischlippe 14 abgewandten Seite des Längskanals 24 der Wischleiste 12 aus.

Das Adapterelement 26 weist auf der der Wischlippe 14 abgewandten, infolge des Wischleistenträgers 10 konvex ausgebildeten Seite der Wischleiste 12 einen plattenförmigen, aus zwei Blechwänden zusammengefalteten Teilbereich auf, in den eine Ausnehmung 40 zum Einhängen eines Bolzens des Wischarms eingebracht ist. In Endbereichen des plattenförmigen Teilbereichs sind jeweils zwei kralienartige Klemmmittel 42,44,46, 48 angeformt, die eine Kopfleiste der Wischleiste 12 und den darin angeordneten Wischleistenträger 10 untergreifen. Mittels Spannkräften der Klemmmittel 42, 44, 46, 48 wird das Adapterelement 26 auf der Wischleiste 12 in Längsrichtung des Wischblatts kraftschlüssig fixiert.

Ferner sind an die Klemmmittel 42, 44 zwei sich entlang einer Deckseite der Wischleiste 12 in Längsrichtung 18, 20 zur Mille des Wischblatts erstreckende Stege 50, 52 angeformt, deren Enden zu sich in Richtung der Wischlippe 14 erstreckenden, senkrecht auf der Deckseite stehenden Stifte 30 32 ausgebildet sind. Die Stifte 30, 32 sind nagelförmig mit einer Spitze ausgebildet, sind in deren Längserstreckung in die Wischleiste 12 eingesteckt und bilden eine in Längsrichtung 18, 20 der Wischleiste 12 wirkende Formschlussverbindung 28 zwischen dem Adapterelement 26 und der Wischleiste 12. Die Spitzen der Stifte 30, 32' ragen bis neben den Wischleistenträger 10 im Längskanal 24 der Wischleiste 12.

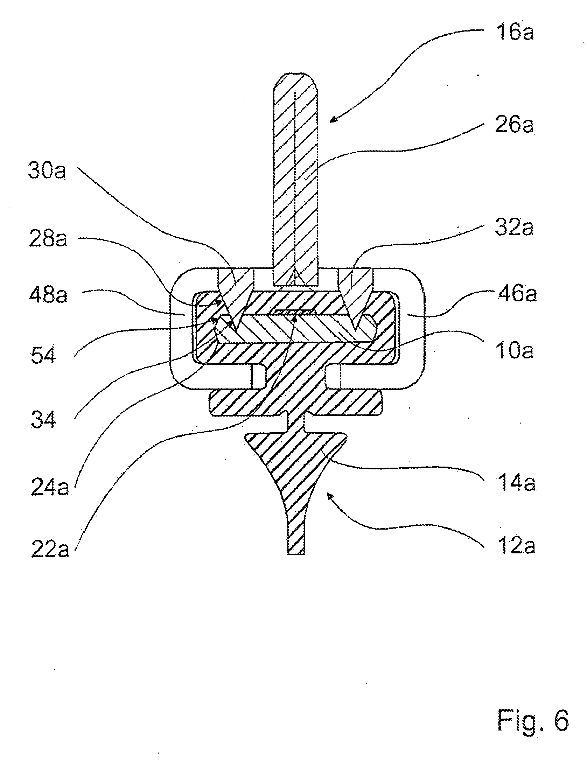

In Fig. 6 ist ein Querschnitt durch ein alternatives Wischblatt dargestellt das durch Anspruch 1 abgedeckt wird. Bei den Ausführungsbeispielen sind in der Beschreibung im Wesentlichen gleiche Bauteile grundsätzlich mit den gleichen Bezugszeichen beziffert, wobei zur Unterscheidung der Ausführungsbeispiele in Fig. 6 der Buchstabe "a" hinzugefügt ist. Ferner kann bezüglich gleichbleibender Merkmale und Funktionen auf die Beschreibung zum Ausführungsbeispiel in den Fig. 1 bis 5 verwiesen werden. Die nachfolgende Beschreibung beschränkt sich im Wesentlichen auf die Unterschiede zum Ausführungsbeispiel in den Fig. 1 bis 5.

Das Wischblatt weist eine Adaptereinheit 16a mit einem Adapterelement 26a auf, das mit zwei nagelförmigen Stiften 30a, 32a, ausgehend von einer Deckseite einer Wischleiste 12a durch eine Wandung der Wischleiste 12a hindurch in eine vorab in einen Wischleistenträger 10a eingebrachte Ausnehmung geführt ist. Die Stifte 30a, 32a bilden eine Formschlussverbindung 34 zwischen dem Adapterelement 26a und dem Wischleistenträger 10a sowie eine Formschlussverbindung 28a zwischen dem Adapterelement 26a und der Wischleiste 12a sowie eine Formschlussverbindung 54 zwischen dem Wischleistenträger 10a und der Wischleiste 12a.

## Patentansprüche

1. Wischblatt, insbesondere für ein Kraftfahrzeug, mit einem federelastischen Wischleistenträger (10a) und einer vom Wischleistenträger (10a) getragenen Wischleiste (12a), deren Wischlippe (14a) sich entlang einer konkaven Seite des Wischleistenträgers (10a) erstreckt, sowie mit einer von der Wischleiste (12a) getrennt ausgebildeten Adaptereinheit (16a) zur Anlenkung an einen Wischarm, wobei die Wischleiste (12a) als Hohlprofil mit einem Längskanal (24a) ausgebildet und der Wischleistenträger (10a) in Längskanal (24a) der Wischleiste (12a) angeordnet ist, **dadurch gekennzeichnet** der Wischleistenträger (10a) und die Wischleiste (12a) im Bereich der Adaptereinheit (16a) über wenigstens eine in Längsrichtung (18, 20) wirkende Formschlussverbindung (54) verbunden sind.

2. Wischblatt nach einem der vorhergehenden Ansprüche, **dadurch gekennzeichnet, dass** wenigstens ein Adapterelement (26a) der Adaptereinheit (16a) über eine in Längsrichtung (18, 20) wirkende Formschlussverbindung (26a) mit der Wischleiste (12a) verbunden ist.

3. Wischblatt nach Anspruch 2, **dadurch gekennzeichnet, dass** das Adapterelement (26a) wenigstens einen Stift (30a, 32a) aufweist, der im montierten Zustand in dessen Längserstreckung in die Wischleiste (12a) eingeführt ist und die Formschlussverbindung (28a) bildet.

4. Wischblatt nach Anspruch 3, **dadurch gekennzeichnet, dass** der Stift (30a, 32a) nagelförmig mit einer Spitze ausgebildet ist.

5. Wischblatt nach einem der vorhergehenden Ansprüche, **dadurch gekennzeichnet, dass** zumindest ein Adapterelement (26a) der Adaptereinheit (16a) im montierten Zustand in Längsrichtung (18, 20) über zumindest eine Formschlussverbindung (34) und/oder eine Stoffschlussverbindung mit dem Wischleistenträger (10a) verbunden ist.

## Claims

1. Wiper blade, in particular for a motor vehicle, with a spring-elastic wiper strip carrier (10a) and a wiper strip (12a) which is carried by the wiper strip carrier (10a) and the wiping lip (14a) of which extends along a concave side of the wiper strip carrier (10a), and with an adapter unit (16a), which is formed separately from the wiper strip (12a), for coupling to a wiper arm, wherein the wiper strip (12a) is designed as a hollow profile with a longitudinal channel (24a), and the wiper strip carrier (10a) is arranged in the longitudinal channel (24a) of the wiper strip (12a), **characterized in that** the wiper strip carrier (10a) and the wiper strip (12a) are connected in the region of the adapter unit (16a) via at least one form-fitting connection (54) acting in the longitudinal direction (18, 20).

2. Wiper blade according to Claim 1, **characterized in that** at least one adapter element (26a) of the adapter unit (16a) is connected to the wiper strip (12a) via a form-fitting connection (28a) acting in the longitudinal direction (18, 20).

3. Wiper blade according to Claim 2, **characterized in that** the adapter element (26a) has at least one pin (30a, 32a) which, in the fitted state, is introduced in the longitudinal extent thereof into the wiper strip (12a) and forms the form-fitting connection (28a).

4. Wiper blade according to Claim 3, **characterized in that** the pin (30a, 32a) is of nail-shaped design with a point.

5. Wiper blade according to one of the preceding claims, **characterized in that**, in the fitted state, at least one adapter element (26a) of the adapter unit (16a) is connected to the wiper strip carrier (10a) in the longitudinal direction (18, 20) via at least one form-fitting connection (34) and/or a cohesive material joint.

## Revendications

1. Balai d'essuie-glace, en particulier pour un véhicule automobile, comprenant un support de raclette de balai d'essuie-glace (10a) élastique à ressort et une raclette de balai d'essuie-glace (12a) portée par le support de raclette de balai d'essuie-glace (10a), dont la lèvre de balai d'essuie-glace (14a) s'étend le long d'un côté concave du support de raclette de balai d'essuie-glace (10a), et comprenant aussi une unité d'adaptateur (16a) réalisée séparément de la raclette de balai d'essuie-glace (12a) et devant être articulée à un bras d'essuie-glace, la raclette de balai d'essuie-glace (12a) étant réalisée sous forme de profilé creux avec un canal longitudinal (24a), et le support de raclette de balai d'essuie-glace (10a) étant disposé dans le canal longitudinal (24a) de la raclette de balai d'essuie-glace (12a), **caractérisé en ce que** le support de raclette de balai d'essuie-glace (10a) et la raclette de balai d'essuie-glace (12a) sont connectés dans la région de l'unité d'adaptateur (16a) par le biais d'au moins une connexion par engagement par coopération de forme (54) agissant dans la direction longitudinale (18, 20).

2. Balai d'essuie-glace selon la revendication 1, **caractérisé en ce qu'**au moins un élément adaptateur (26a) de l'unité d'adaptateur (16a) est connecté à la raclette de balai d'essuie-glace (12a) par le biais d'une connexion par engagement par coopération de forme (28a) agissant dans la direction longitudinale (18, 20).

3. Balai d'essuie-glace selon la revendication 2, **caractérisé en ce que** l'élément adaptateur (26a) présente au moins une goupille (30a, 32a) qui est introduite dans la raclette de balai d'essuie-glace (12a) dans l'état monté suivant son étendue longitudinale, et qui forme la connexion par engagement par coopération de forme (28a).

4. Balai d'essuie-glace selon la revendication 3, **caractérisé en ce que** la goupille (30a, 32a) est réalisée sous forme d'aiguille avec une pointe.

5. Balai d'essuie-glace selon l'une quelconque des revendications précédentes, **caractérisé en ce qu'**au moins un élément adaptateur (26a) de l'unité d'adaptateur (16a) est connecté dans l'état monté dans la direction longitudinale (18, 20) au support de raclette de balai d'essuie-glace (10a) par le biais d'au moins une connexion par engagement par coopération de forme (34) et/ou d'une connexion par engagement par liaison de matière.
